# EUROPEAN PATENT SPECIFICATION

(11) **EP 1 368 590 B1**
(45) Date of publication and mention of the grant of the patent: **14.12.2005**
(21) Application number: 02704978.2
(22) Date of filing: 14.03.2002
(51) Int. Cl.: F16L 37/088

(54) **PIPE COUPLING**
ROHRKUPPLUNG
RACCORD POUR TUYAU

(30) Priority: 14.03.2001 GB 0106268
(43) Date of publication of application: 10.12.2003
(73) Proprietor: Advanced Fluid Connections plc, Southgate Market Weighton York YO43 3BG (GB)
(72) Inventor: DAVIDSON, Paul, Anthony, Prestbury SK10 4PT (GB)
(74) Representative: Goddard, David John
(86) International application number: PCT/GB2002/001160
(87) International publication number: WO 2002/073079

(56) References cited:
- EP-A1- 0 771 989
- DE-A1- 19 932 307
- SE-B- 439 360
- US-A- 5 226 682

## Description

### Field of the Invention

This invention relates to the connection or termination of one body to another body. In principal each body may be any type of body and of any shape. The connections or terminations may also be to intermediate units which are themselves then connected to other systems.

### Background of the Invention

Bodies are often connected together by means of a connector which is secured to both bodies. This is the case also if a body is to be terminated to another body. As an illustration, pipes are currently terminated into brake cylinder blocks, and other motor vehicle systems, by mean of connectors which are secured both to the pipe end and also to the other body, i.e. the motor vehicle system. It would be advantageous to be able to connect bodies together directly rather than via a connector. It would also be desirable that the termination be as simple as possible whilst providing a strong connection even under high pressure, and which is well sealed. It would also be desirable that the connection be robust. Other objects of the invention will be apparent from the following description.

EP-A-0771 989 describes an assembly having a first body including a housing for interconnecting with a second body, the housing being provided with an inlet for receiving the end of the second body and the second body having a portion with an external diameter different from the remainder of the second body, and means for securing said second body end within said inlet, said securing means having at least one first securing member to engage the second body at said different external diameter portion thereby to secure said second body end within said inlet.

### Statements of Invention

In accordance with the present invention, however, such an assembly is characterised in that the first securing member is in the form of at least two separate parts. The first securing member may, in particular, be in two or three parts.

In one type of embodiment the first securing member is radially deformable.

In another type of embodiment, the first securing member is substantially non-deformable.

An at least two part first securing member is advantageous, for example, for use with a smaller diameter second body where deformation of a continuous ring or split ring for example may be a problem.

Preferably, the securing means includes a second securing member for retaining the first securing member in engagement with the second body and thereby assisting locking the second body end within the inlet of the first body.

The second securing member may comprise, for example, a ring, collar or cap. Preferably the second securing member is in the form of a ring, collar or cap moveable longitudinally relative to the end of the second body in order to be located where it is able to hold the first securing member in its second body engaging position. The second securing member is preferably substantially non-deformable, i.e. is substantially rigid.

The second securing member preferably is adapted to be positively retained in the first body in a position to hold the first securing member in its second body engaging position. The second securing member may be push fitted into place. The second securing member may be provided with at least one retaining lug, barb or the like to retain the second securing member in place. Alternatively, the second securing member may be provided with a screw thread and screwed into place. Alternatively or additionally, a circlip may be provided behind the second securing member to retain it in place. The circlip may be provided in outwardly biased form, retainable in a recess in the inlet behind the second securing member to retain the same. The circlip may be provided inwardly biased, retainable in a recess in the surface of the second body behind the second securing member.

The invention may be realised with different relative positions of the first securing member, second securing member and housing. For example, the second securing member may be located between the first securing member and the housing, or the first securing member may be located between the second securing member and the housing, or the housing may be located between the first securing member and the second securing member. In one embodiment the second securing member may fill the space in the inlet to prevent movement of the securing means and second body, thereby to prevent removal of the second body.

The said at least one first securing member may be located partly or wholly within the housing inlet or partly or wholly outside thereof. Where the first securing member is located partly or wholly within the housing inlet the fitting is less intrusive, has a sleeker appearance and has less chance of damage.

Where the first securing member is located in the housing inlet, it may be located in the housing inlet prior to insertion of the second body end. Alternatively, the first securing member may be inserted in the housing after or with the second body end.

In the type of embodiment where the first securing member is deformable as aforesaid, the first securing member may be located in the housing inlet prior to insertion of the second body end. In the embodiment where the first securing member is substantially non-deformable, it may be inserted in the housing after or with the second body end.

As the first securing member is provided in at least two parts these can more easily be inserted in the housing inlet after or with the second body end.

The first securing member and second securing member may comprise any suitable material. The material may include a resilient material. The material may include a resilient material, for example, where the securing member is deformable. Resilient materials may include rubber, elastomer or plastics materials. The material may include a metal, e.g. spring steel.

Preferably, the portion of the second body with an external diameter different from the remainder of the second body is circumferentially extending, but need not be, e.g. it may take the form of one or more portions on the second body with different external diameter. For the avoidance of doubt, the term diameter includes bodies where the cross section is other than circular. The portion of the second body with different external diameter may be located within the inlet or outside thereof. Preferably, where the first securing member is inside the first body then the portion of the second body with different external diameter is also inside. The portion of the second body end having an external diameter different from the remainder may take a number of different forms. Preferred forms include a groove (i.e. a portion of smaller external diameter), or an "upstage" or "upset" (i.e. a portion of enlarged external diameter). Another preferred embodiment includes an enlarged diameter end portion longitudinally extending to the open end of the second body to form e.g. a bell shape. The provision of a portion of enlarged external diameter has the advantage that the bore of the second body is not affected which makes the arrangement particularly suitable for small bore bodies.

Preferably, the assembly further includes sealing means to provide a seal between the housing and the second body. The sealing means may comprise an O ring. The assembly may further include means to hold the sealing means in position, e.g. a compression ring or washer.

The first body may be any body for retaining a second body and is, in principal, not limited. The first body may be an operating unit. For instance, the first body may be a vehicle system such as a brake cylinder block or air conditioning units, or it may be a junction box to which an electrical conduit is to be connected. Alternatively it may be an intermediate unit which is in turn connectable to another system, an example being a unit or connection for attachment of a high pressure hydraulic hose connector to a water stand pipe providing a supply of water to an hydraulic high pressure hose. The first body may thus be an adapter or connector which connects the second body in turn to a still further body.

The second body may, in principal, be any shape or have any cross-sectional profile. The second body may be hollow or solid. The second body may include, for instance, any tubular member, pipe, conduit or duct. Specific examples include pipes in hydraulic systems or conduits for electrical cables.

It can seen from the foregoing that the present invention is concerned with the provision of a female housing, where the housing forms part of a first body, e.g. an operative unit or being part of an intermediate unit for connection to another system. Moreover, preferably, the present invention is based on the provision of a housing provided with an inlet into which a second body may be inserted.

Advantageously, the invention permits a second body to be directly connected to a first body without need for a separate connector. The second body may be simply push fitted into the housing of the first body, thus not requiring complicated or time consuming assembly.

In one type of embodiment, the inlet preferably includes a reduced diameter mouth portion and an enlarged chamber extending therefrom. The portion of the second body end having its external diameter different from that of the remainder of the second body lies wholly or partly within the chamber. In one embodiment, the chamber is of sufficiently large diameter to accommodate a first securing member which is spring biased towards a condition in which it is relatively narrow diameter. The result is that the securing member traps the second body end within the inlet, the mouth of which may then be closed by means of an appropriate second securing member such as a ring, collar or cap thereby to restrict further movement of the first securing member.

In a further embodiment, where the inlet includes a reduced diameter mouth and an enlarged diameter chamber, and where the pipe end has its different external diameter portion located wholly or partly within the chamber, the first securing member may be manoeuvred into the chamber after insertion of the second body end, thereby to engage the different external diameter portion thereof. The parts of the securing member may be substantially non-deformable in this case, which parts thereof may be manoeuvred, preferably one part at a time, into the chamber after insertion of the second body end. The mouth of the inlet may again be closed by an appropriate second securing member to hold the first securing member in place and prevent removal of the second body.

In a still further embodiment, the inlet may include a mouth portion substantially the same diameter as a chamber portion extending therefrom. In one such embodiment, the first securing member, which preferably is substantially rigid, is put onto the second body end, in engagement with the different external diameter portion thereof, prior to insertion of the second body end into the inlet. The external diameter of the securing member when so engaged on the second body end is such that the member is in close abutment with the inlet wall, thereby keeping the securing member firmly in place about the second body end. An appropriate second securing member may then be employed to close the mouth of the inlet to hold the first securing member and second body in place in the inlet.

It will be appreciated that presently existing bodies may have inlets which include a threaded portion or some other means for securing another body therein. The invention may include an adapter having one threaded end, preferably externally threaded, for engagement with the threaded portion of a main body, or being otherwise adapted for engagement with the inlet of a main body, and the having the other end provided with an inlet for receiving the end of a second body, the second body having a portion with an external diameter different from the remainder of the second body, and means for securing said second body end within said inlet of the adapter, said securing means having at least one first securing member to engage the second body at said different external diameter portion thereby to secure said second body end within said inlet of the adapter. The adapter can be pre-fitted to the main body, e.g. via the screw thread, such that the second body, in use, when required, can be easily push fitted into the adapter inlet and thereby is connected to the main body without a complex and time consuming operation being required.

### Brief Description of the Drawings

The present invention will be further described, by way of examples only, with reference to the accompanying drawings, in which:-
Figure 1 shows, in longitudinal section, a first embodiment of assembly according to the invention;
Figure 2 shows in longitudinal section, a second embodiment of assembly according to the invention;
Figure 3 shows in longitudinal section, a third embodiment of assembly according to the invention;
Figure 4 shows in longitudinal section, an additional retention means for an assembly according to the invention; and
Figure 5 shows in longitudinal section, a further embodiment of assembly according to the invention.

### Detailed Description of the Specific Embodiments

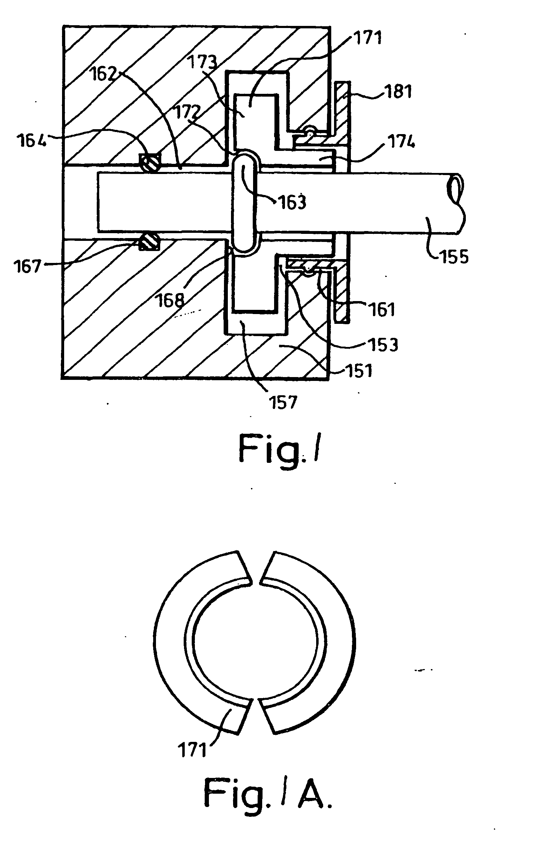

Referring to Figure 1 of the accompanying drawings, a first embodiment of an assembly in accordance with the present invention comprises a housing 151 forming part of an item of equipment, e.g. a brake cylinder. The housing 151 includes an inlet 153 within which is located the end of a hydraulic tube 155. The inlet 153 includes an enlarged diameter portion or chamber 157 and a smaller diameter mouth portion 161.

The very end of the tube 155 is located in a further portion 162 of the inlet 153. The portion 162 of the inlet 153 is of smaller diameter than the mouth portion 161. Within the portion 162 of the inlet is provided an O ring 167 which is located in a recess 164 in the radial surface of the inlet portion 162. The O ring 167 provides a radial seal between the inlet and the tube 155.

The tube 155 is provided with an upstage or protrusion 163 at a position distanced from the end of the tube 155. The upstage 163 is of larger external diameter than the inlet portion 162 but smaller than the diameter of the mouth portion 161 of the inlet.

The end of the tube 155 is inserted into the inlet 153 until the upstage 163 abuts against the radial wall 168 of the chamber 157. The end of the tube 155 is held in position in the inlet 153 by means of a two part retaining ring 171 and retaining cap 181. The retaining ring 171 is constructed of steel and is substantially rigid..It will be appreciated that it may be made of other materials, e.g. other metallic materials. The retaining ring 171 is made in two parts in order to fit the ring 171 within the inlet 153. The retaining ring 171 is also shown end-on in Figure 1A which illustrates the two part nature of the ring. The retaining ring 171 is substantially L-shaped in cross section but has a cut-away portion 172 shaped to match the profile of the upstage 163 in the tube 155. After insertion of the tube 155 in the inlet 153 the two halves of the retaining ring 171 are then manoeuvred through the mouth portion 161 of the inlet and into the position shown in Figure 1. The ring 171 has a radially extending portion 173 and a longitudinally extending portion 174 which extends for some distance along the tube 155. The radially extending portion 173 of the ring 171 extends into the enlarged diameter chamber 157 of the inlet 153.

After insertion of the ring 171, retaining cap 181, which is circumferentially continuous and substantially L-shaped in cross section, is inserted into the radial space between the surface of the longitudinal portion 174 of the ring 171 and the surface of the mouth portion 161 of the inlet as shown. As a result, the retaining ring 171 is held firmly in place and thereby the tube 155 is secured within the inlet. Cap 181 may be provided with retaining means such as a circumferential retaining projection which snaps into a corresponding recess in the surface of the month portion 161 to positively retain the cap with the mouth 161 of the inlet.

The retaining cap 181 has an internal diameter greater than the diameter of the upstage 163 of the tube 155 which allows the retaining cap 181 to be slipped over the end of the tube 155 prior to insertion of the tube 155 into the inlet.

In an alternative embodiment to that shown in Figure 1, the O ring seal 167 can be located in a holder at a position immediately adjacent the upstage 163 and between the upstage and the radial wall 168 of the enlarged chamber 157.

In a further alternative embodiment to that shown in Figure 1, the tube 155 could be provided with a groove and ring 171 provided with a corresponding inwardly facing rib for engagement therewith.

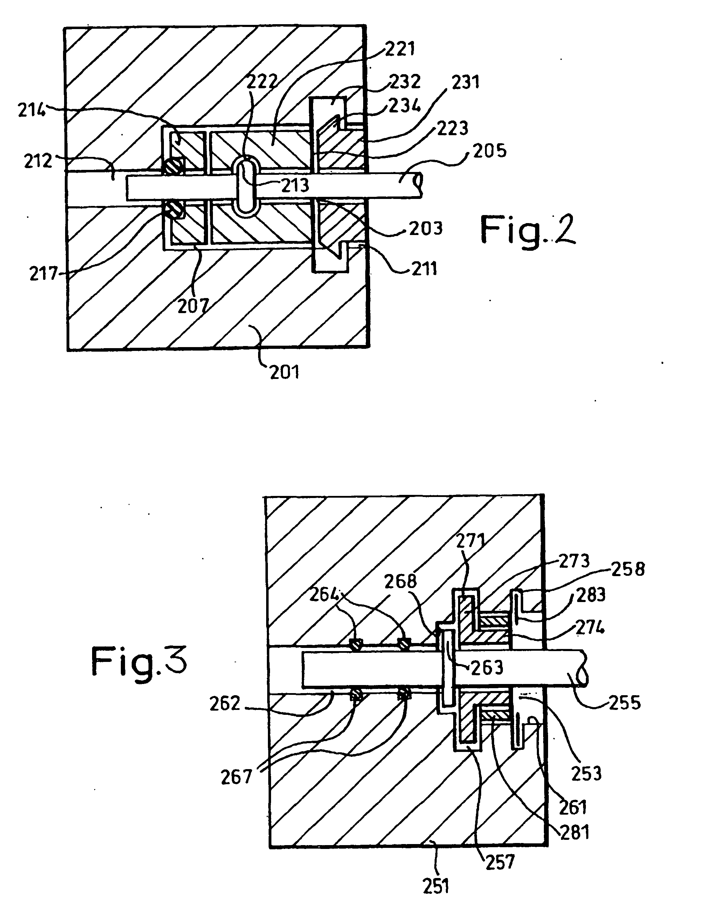

Referring to Figure 2 there is shown a housing 201 (only part of which is shown). The housing may form part of any fitting or piece of equipment, e.g. a brake cylinder block. The housing 201 includes an inlet 203 within which is located the end of a tube 205.

The inlet 203 has a mouth portion 211 and a chamber portion 207 of the same diameter. The mouth portion 211 and the chamber portion 207 are longitudinally spaced by a portion 232 of larger diameter which forms a recess in the inlet.

The very end of the tube 205 is located within a smaller diameter portion 212 of the inlet. The surface of the inlet 203 is sealed to the surface of the tube 205 by means of O ring 217 which is held in place by circumferentially continuous collar 214.

The tube 205 is provided with an upstage 213 of enlarged external diameter which is positioned at a distance from the end of tube 205. The upstage 213 is engaged by split collar 221. The collar 221 is provided in two parts which may be fitted around the tube 205. The collar 221 is provided with a radial groove 222 extending circumferentially on its inner surface. The groove 222 engages the upstage 213 on the tube 205.

The two part retaining collar 221 is fitted onto the tube 205 such that the groove 222 of the collar 221 fits over the upstage 213 in the tube 205. Then tube 205 with the collar 221 thereon is inserted into the inlet 203 until the inner most end of the collar 221 abuts against the collar 214 holding the O ring 217. The outer most end 223 of the collar 221 lies substantially level with the inner most edge of the recess 232. The two parts of the collar 221 are held in engagement around the tube 205 by virtue of the radially outer surface of the collar 221 being in close abutment with the inner surface of the chamber 207.

To prevent withdrawal of the tube 205 from the inlet 203, a retaining ring 231 composed of plastics material is provided. Another suitable material may be spring steel. The inner diameter of the cap 231 is sufficient to enable the ring 231 to be slid over the upstage 213 on the tube 205. The retaining ring 231 is substantially ring shaped and has a circumferentially extending barb 234 upstanding from its radially outer surface as shown in Figure 2.

The retaining ring 231 is inserted into the inlet 203 behind the collar 221. The ring 231 is resilient enough to be squeezed through the mouth 211 of the inlet. When the ring 231 has been pushed far enough through the mouth 211, the barb 234 on the ring 231 extends once again radially into the recess 232 thereby locking the ring 231 and collar 221 within the inlet and thereby firmly holding in place the tube 205.

In an alternative to Figure 2, the collar 221 could be provided with a rib to engage a grooved tube.

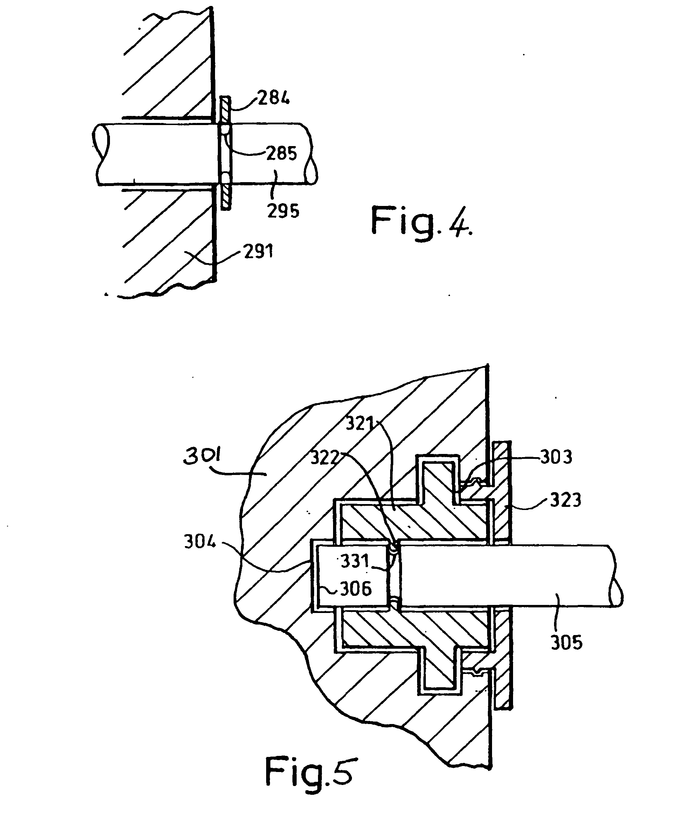

Referring to Figure 3, there is shown a housing 251 (only part of which shown). The housing 251 may form part of an operative unit, e.g. a brake cylinder block or other motor vehicle system. The housing 251 includes a inlet 253 within which is located the end of a tube 255.

The inlet 253 includes two portions of larger diameter 257 and 258 which form recesses in the surface of the inlet.

The very end of the tube 255 is located within a smaller diameter portion 262 of the inlet 253. The inner surface of the inlet is sealed to the surface of the tube 255 by means of O rings 267, of which there are two, the O rings being located within recesses 264 in the surface of the inlet portion 262.

The tube 255 is provided with an upstage or collar 263 on its surface thereby presenting a portion with enlarged external diameter. The upstage 263 is positioned at a distance from the very end of the tube 255.

The tube 255 is inserted into the inlet 253 until the upstage 263 abuts against the radial stepped surface 268 of the inlet 253 as shown in the Figure.

The tube 255 is held in place by a two part retaining ring 271. The retaining ring 271 is provided in two parts in a similar manner to the retaining ring shown in Figure 1A. The retaining ring 271 is substantially L-shaped in longitudinal cross section. The two parts of the retaining ring 271 are positioned in the inlet 253 behind the upstage 263 as shown in the Figure. The retaining ring 271 comprises a radially outwardly extending portion 273 which locates within the enlarged diameter portion 257 of the inlet 253 and a longitudinally extending portion 274 which extends a distance along the tube 255 as shown iri the Figure. The radial space between the portion 274 of the ring 271 and the surface of the inlet 253 is occupied by inserting a circumferentially continuous collar 281. The collar 281 is retained in place by means of a circlip 283 which squeezes to fit it through the reduced diameter mouth portion 261 of the inlet 253 but then expands into the recess 258 in the inlet surface. The embodiment shown in Figure 3 permits the tube 255 to be freely rotated within the housing 251.

Alternatively, the collar 281 or some other collar may be retained in place, instead of circlip 283, by an inwardly biased circlip which grips a recess in the tube 255 behind the collar. Such an arrangement is shown schematically in Figure 4, which shows such a circlip 284, adjacent part of a collar 291 to retain the same, the circlip 284 gripping a recess 285 in a tube 295. The detail of the rest of the assembly has been omitted from Figure 8 for illustration purposes.

Referring to Figure 5 there is shown a further embodiment of assembly according to the invention for the retention of a solid rod or beam 305. The assembly comprises a body 301 having an inlet 303 within which is located the end of the rod or beam 305. The assembly further comprises a two part retaining ring 321, which has an inwardly directed lug 322 for engaging in a circumferential groove 331 in the rod or beam 305. The remaining space in the inlet between the two part ring 321 and the surface of the inlet 303 is a retention cap 323 which holds two part ring 321 firmly in place thereby holding the end of rod or beam 305 in position in the inlet. It will be appreciated that no sealing means are required between the body 301 and the rod or beam 305 since there is no fluid connection involved. Moreover, the end 306 of rod or beam 305 terminates adjacent a surface 304 of the housing.

## Claims

1. An assembly having a first body including a housing (151;201;251;301) for interconnecting with a second body (155;205;255;305), the housing being provided with an inlet (153;203;253;303) for receiving the end of the second body and the second body having a portion (163;213;263;331) with an external diameter different from the remainder of the second body, and means for securing said second body end within said inlet, said securing means having at least one first securing member to engage the second body at said different external diameter portion thereby to secure said second body end within said inlet **characterised in that** the first securing member (171; 221; 271; 321) is in the form of at least two separate parts.

2. An assembly as claimed in claim 1 wherein said at least one first securing member is deformable such that said first securing member deforms during insertion of the second body and at least partially reforms to a position in which said at least one securing member engages the second body at said different external diameter portion thereby to prevent relative longitudinal movement between said second body end and said first securing member.

3. An assembly as claimed in claim 1 or 2 wherein the first securing member is radially deformable.

4. An assembly as claimed in any preceding claim wherein said first securing member (171;221;271;321) is substantially non-deformable.

5. An assembly as claimed in any preceding claim wherein the first securing member (171;221;271;321) is in two or three parts.

6. An assembly as claimed in any preceding claim wherein the first securing member (171;221;271;321) is located partly or wholly within the housing inlet (153;203;253;303).

7. An assembly as claimed in claim 6 wherein the first securing member (321) is located in the housing inlet prior to insertion of the second body end (305).

8. An assembly as claimed in claim 6 wherein the first securing member (171;221;271) is inserted in the housing after or with the second body end (155;205;255).

9. An assembly as claimed in any preceding claim wherein the first securing member is located partly or wholly outside the housing inlet.

10. An assembly as claimed in any preceding claim wherein the securing means includes a second securing member (181;231;281;283;323) for retaining the first securing member (171;221;271;321) in engagement with the second body (155;205;255;305) and thereby assisting locking the second body end within the inlet (153;203;253;303) of the first body.

11. An assembly as claimed in claim 10 wherein the second securing member (181;231;281;323) comprises a ring, collar or cap.

12. An assembly as claimed in claim 11 wherein the second securing member (181;231;281;323) is moveable longitudinally relative to the end of the second body in order to be located where it is able to hold the first securing member in its second body engaging position.

13. An assembly as claimed in any of claims 10 to 12 wherein the second securing member (181;231;323) is operative to be push fitted into place to retain the first securing member.

14. An assembly as claimed in any of claims 10 to 13 wherein the second securing member (181;231;323) is adapted to be positively retained in the first body in a position to hold the first securing member (171;221;321) in its second body engaging position.

15. An assembly as claimed in claim 14 wherein the second securing members (181;231;323) is provided with at least one retaining lug, barb or the like (234) to retain the second securing member in the first body.

16. An assembly as claimed in claim 14 wherein the second securing member is provided with a screw thread to retain the second securing member in the first body.

17. An assembly as claimed in claim 14 wherein a circlip (283) may be provided behind the second securing member (281) to retain it in place.

18. An assembly as claimed in any preceding claim wherein the second securing member (181;281;323) is located between the first securing member (171;271;321) and the housing.

19. An assembly as claimed in any preceding claim wherein the first securing member is located between the second securing member and the housing.

20. An assembly as claimed in any preceding claim wherein the housing is located between the first securing member and the second securing member.

21. An assembly as claimed in any preceding claim wherein the second securing member (181;231;281;323) fills the space in the inlet (153;203;253;303) to prevent movement of the first securing member and second body, thereby to prevent removal of the second body (155;205;255;305).

22. An assembly as claimed in any preceding claim wherein the first securing member and/or second securing member (231) comprises a resilient material.

23. An assembly as claimed in claim 22 wherein the resilient material is selected from the group comprising rubber, elastomer or a plastics material.

24. An assembly as claimed in any of claims 1 to 21 wherein the first securing member (171) and/or second securing member comprises a metal.

25. An assembly as claimed in any preceding claim wherein the portion (163;213;263;331) of the second body with an external diameter different from the remainder of the second body is circumferentially extending.

26. An assembly as claimed in any preceding claim wherein the portion (331) of the second body (305) with an external diameter different from the remainder of the second body comprises a groove.

27. An assembly as claimed in any preceding claim wherein the portion (163;213;263) of the second body (155;205;255) with an external diameter different from the remainder of the second body comprises a portion of enlarged external diameter.

28. An assembly as claimed in claim 27 wherein the portion of enlarged external diameter comprises an enlarged diameter end portion longitudinally extending to the open end of the second body.

29. An assembly as claimed in any preceding claim wherein the assembly further includes sealing means (167;217;267) to provide a seal between the housing and the second body.

30. An assembly as claimed in claim 29 wherein the sealing means (167;217;267) comprises an O ring.

31. An assembly as claimed in any preceding claim wherein the first body comprises an operating unit.

32. An assembly as claimed in any preceding claim wherein the first body is an adapter or connector which connects the second body in turn to a still further body.

33. An assembly as claimed in any preceding claim wherein the second body (155;205;255;305) is hollow or solid.

34. An assembly as claimed in any preceding claim wherein the second body (155) comprises a tubular member, pipe, conduit or duct.

35. An assembly as claimed in any preceding claim wherein the inlet includes a reduced diameter mouth portion (161) and an enlarged chamber (157) extending therefrom.

36. An assembly as claimed in claim 35 wherein the portion (163) of the second body (155) end having its external diameter different from that of the remainder of the second body lies wholly or partly within the enlarged chamber (157).

37. An assembly as claimed in claim 35 or 36 wherein the chamber is of sufficiently large diameter to accommodate a first securing member which is spring biased towards a condition in which it is relatively narrow diameter.

38. An assembly as claimed in claim 35 or 36 wherein the first securing member is located at least partly within the enlarged chamber and there is sufficient room, within the chamber, for the securing member to be expanded, preferably radially, as a result of the introduction of the second body within the securing member.

39. An assembly as claimed in any of claims 35 to 38 wherein the mouth of the inlet is closed by means of a second securing member such as a ring, collar or cap thereby to restrict further movement of the first securing member.

40. An assembly as claimed in any preceding claim wherein the inlet (153) includes a reduced diameter mouth (161) and an enlarged diameter chamber (157), and the second body end (155) has its different external diameter portion located wholly or partly within the chamber, and the first securing member (171) is manoeuvred into the chamber (157) after insertion of the second body end, thereby to engage the different external diameter portion (163) thereof.

41. An assembly as claimed in any preceding claim wherein the inlet (203) includes a mouth portion (211) substantially the same diameter as a chamber portion (207) extending therefrom.

42. An assembly as claimed in claim 41 wherein the first securing member (221) is put onto the second body end (205), in engagement with the different external diameter portion (213) thereof, prior to insertion of the second body end into the inlet (203).

43. An assembly as claimed in claim 42 wherein the external diameter of the first securing member (221) when so engaged on the second body end (205) is such that the member is in close abutment with the inlet wall, thereby keeping the securing member firmly in place about the second body end.

44. An assembly as claimed in claim 43 wherein a second securing member (231) is employed to close the mouth (211) of the inlet (203) to hold the first securing member (221) and second body (205) in place in the inlet.

45. An assembly as claimed in any one preceding claim wherein the first body is an adapter having one end provided with the inlet for receiving the end of the second body and the other end threaded, preferably externally threaded, for engagement with a threaded portion of another body, or being otherwise adapted for engagement with the inlet of another body.

## Patentansprüche

1. Anordnung mit einem ersten Körper, der ein Gehäuse (151; 201; 251; 301) zur Verbindung mit einem zweiten Körper (155; 205; 255; 305) umfaßt, wobei das Gehäuse mit einem Einlaß (153; 203; 253; 303) zur Aufnahme des Endes des zweiten Körpers versehen ist und der zweite Körper einen Abschnitt (163; 213; 263; 331) mit einem Außendurchmesser aufweist, der sich vom Rest des zweiten Körpers unterscheidet, und mit Mitteln zur Befestigung des Endes des zweiten Körpers in dem Einlaß, wobei die Befestigungsmittel mindestens ein erstes Befestigungselement aufweisen, das am Abschnitt mit dem anderen Außendurchmesser in Eingriff mit dem zweiten Körper tritt, um **dadurch** das Ende des zweiten Körpers in dem Einlaß zu befestigen, **dadurch gekennzeichnet, daß** das erste Befestigungselement (171; 221; 271; 321) in Form von mindestens zwei getrennten Teilen vorliegt.

2. Anordnung nach Anspruch 1, bei der das mindestens eine erste Befestigungselement so verformbar ist, daß es sich beim Einsetzen des zweiten Körpers verformt und zumindest teilweise bis zu einer Position, in der das mindestens eine Befestigungselement mit dem zweiten Körper an dem Abschnitt mit dem anderen Außendurchmesser in Eingriff tritt, in seine Form zurückkehrt, um **dadurch** eine Relativbewegung in Längsrichtung zwischen dem Ende des zweiten Körpers und dem ersten Befestigungselement zu verhindern.

3. Anordnung nach Anspruch 1 oder 2, bei der das erste Befestigungselement radial verformbar ist.

4. Anordnung nach einem vorhergehenden Anspruch, bei der das erste Befestigungselement (171; 221; 271; 321) im wesentlichen nicht verformbar ist.

5. Anordnung nach einem vorhergehenden Anspruch, bei der das erste Befestigungselement (171; 221; 271; 312) in zwei oder drei Teilen vorliegt.

6. Anordnung nach einem vorhergehenden Anspruch, bei der das erste Befestigungselement (171; 221; 271; 312) ganz oder teilweise in dem Gehäuseeinlaß (153; 203; 253; 303) sitzt.

7. Anordnung nach Anspruch 6, bei der das erste Befestigungselement (321) vor dem Einsetzen des Endes des zweiten Körpers (305) in dem Gehäuse angeordnet wird.

8. Anordnung nach Anspruch 6, bei der das erste Befestigungselement (171; 221; 271) nach dem Ende des zweiten Körpers (155; 205; 255) oder mit diesem in das Gehäuse eingesetzt wird.

9. Anordnung nach einem vorhergehenden Anspruch, bei der das erste Befestigungselement teilweise oder vollständig außerhalb des Gehäuseeinlasses angeordnet ist.

10. Anordnung nach einem vorhergehenden Anspruch, bei der die Befestigungsmittel ein zweites Befestigungselement (181; 231; 281; 283; 323) umfassen, um das erste Befestigungselement (171; 221; 271; 321) in Eingriff mit dem zweiten Körper (155; 205; 255; 305) zu halten und **dadurch** das Verrasten des Endes des zweiten Körpers im Einlaß (153; 203; 253; 303) des ersten Körpers zu unterstützen.

11. Anordnung nach Anspruch 10, bei der das zweite Befestigungselement (181; 231; 281; 323) einen Ring, einen Kragen oder eine Kappe umfaßt.

12. Anordnung nach Anspruch 11, bei der das zweite Befestigungselement (181; 231; 281; 323) in Längsrichtung relativ zum Ende des zweiten Körpers verschieblich ist, um dort angeordnet zu werden, wo es das erste Befestigungselement in seiner Eingriffsstellung mit dem zweiten Körper halten kann.

13. Anordnung nach einem der Ansprüche 10 bis 12, bei der das zweite Befestigungselement (181; 231; 323) so betätigbar ist, daß es mit Schiebesitz eingesetzt werden kann, um das erste Befestigungselement zu halten.

14. Anordnung nach einem der Ansprüche 10 bis 13, bei der das zweite Befestigungselement (181; 231; 323) dazu eingerichtet ist, im ersten Körper zwangsläufig in einer Stellung gehalten zu werden, in der das erste Befestigungselement (171; 221; 321) in seiner Eingriffsstellung mit dem zweiten Körper gehalten wird.

15. Anordnung nach Anspruch 14, bei der das zweite Befestigungselement (181; 231; 323) mit mindestens einer Haltenase, einem Widerhaken oder dergleichen (234) versehen ist, um das zweite Befestigungselement im ersten Körper zu halten.

16. Anordnung nach Anspruch 14, bei der das zweite Befestigungselement mit einem Schraubgewinde versehen ist, um das zweite Befestigungselement im ersten Körper zu halten.

17. Anordnung nach Anspruch 14, bei der eine Schlauchklemme (283) hinter dem zweiten Befestigungselement (281) vorgesehen sein kann, um dieses in Stellung zu halten.

18. Anordnung nach einem vorhergehenden Anspruch, bei der das zweite Befestigungselement (181; 281; 323) zwischen dem ersten Befestigungselement (171; 271; 321) und dem Gehäuse angeordnet ist.

19. Anordnung nach einem vorhergehenden Anspruch, bei der das erste Befestigungselement zwischen dem zweiten Befestigungselement und dem Gehäuse angeordnet ist.

20. Anordnung nach einem vorhergehenden Anspruch, bei der das Gehäuse zwischen dem ersten Befestigungselement und dem zweiten Befestigungselement angeordnet ist.

21. Anordnung nach einem vorhergehenden Anspruch, bei der das zweite Befestigungselement (181; 231; 281; 323) den Raum im Einlaß (153; 203; 253; 303) ausfüllt, um eine Bewegung des ersten Befestigungselementes und des zweiten Körpers und **dadurch** eine Ablösung des zweiten Körpers (155; 205; 255; 305) zu verhindern.

22. Anordnung nach einem vorhergehenden Anspruch, bei der das erste Befestigungselement und/oder das zweite Befestigungselement (231) ein federndes Material umfaßt.

23. Anordnung nach Anspruch 22, bei der das federnde Material ausgewählt ist aus der Gruppe, die Gummi, Elastomere oder Kunststoff umfaßt.

24. Anordnung nach einem der Ansprüche 1 bis 21, bei der das erste Befestigungselement (171) und/oder das zweite Befestigungselement ein Metall umfaßt.

25. Anordnung nach einem vorhergehenden Anspruch, bei welcher der Abschnitt (163; 213; 263; 331) des zweiten Körpers mit einem Außendurchmesser, der sich vom Rest des zweiten Körpers unterscheidet, in Umfangsrichtung verläuft.

26. Anordnung nach einem vorhergehenden Anspruch, bei welcher der Abschnitt (331) des zweiten Körpers (305) mit einem Außendurchmesser, der sich vom Rest des zweiten Körpers unterscheidet, eine Nut aufweist.

27. Anordnung nach einem vorhergehenden Anspruch, bei welcher der Abschnitt (163; 213; 263) des zweiten Körpers (155; 205; 255) mit einem Außendurchmesser, der sich vom Rest des zweiten Körpers unterscheidet, einen Abschnitt mit vergrößertem Außendurchmesser umfaßt.

28. Anordnung nach Anspruch 27, bei welcher der Abschnitt mit vergrößertem Außendurchmesser einen Endabschnitt mit vergrößertem Außendurchmesser umfaßt, der in Längsrichtung zum offenen Ende des zweiten Körpers verläuft.

29. Anordnung nach einem vorhergehenden Anspruch, die ferner Dichtungsmittel (167; 217; 267) umfaßt, um eine Dichtung zwischen dem Gehäuse und dem zweiten Körper zu bilden.

30. Anordnung nach Anspruch 29, bei der die Dichtungsmittel (167; 217; 267) einen O-Ring umfassen.

31. Anordnung nach einem vorhergehenden Anspruch, bei welcher der erste Körper eine Bedieneinheit umfaßt.

32. Anordnung nach einem vorhergehenden Anspruch, bei welcher der erste Körper ein Adapter oder ein Anschluß ist, der den zweiten Körper wiederum mit noch einem weiteren Körper verbindet.

33. Anordnung nach einem vorhergehenden Anspruch, bei welcher der zweite Körper (155; 205; 255; 305) hohl oder voll ausgebildet ist.

34. Anordnung nach einem vorhergehenden Anspruch, bei welcher der zweite Körper (155) ein rohrförmiges Element, ein Rohr, eine Leitung oder einen Kanal umfaßt.

35. Anordnung nach einem vorhergehenden Anspruch, bei welcher der Einlaß einen Mündungsabschnitt (161) mit verringertem Durchmesser und eine vergrößerte Kammer (157), die von diesem weg verläuft, umfaßt.

36. Anordnung nach Anspruch 35, bei welcher der Abschnitt (163) am Ende des zweiten Körpers (155), dessen Außendurchmesser sich von dem des übrigen zweiten Körpers unterscheidet, vollständig oder teilweise in der vergrößerten Kammer (157) liegt.

37. Anordnung nach Anspruch 35 oder 36, bei der die Kammer einen Durchmesser mit ausreichender Größe aufweist, um ein erstes Befestigungselement aufzunehmen, das mit Federkraft zu einem Zustand hin vorgespannt ist, in dem es einen relativ schmalen Durchmesser aufweist.

38. Anordnung nach Anspruch 35 oder 36, bei der das erste Befestigungselement zumindest teilweise in der vergrößerten Kammer liegt und ausreichend Raum in der Kammer vorhanden ist, damit das Befestigungselement in Folge der Einführung des zweiten Körpers in das Befestigungselement, vorzugsweise in radialer Richtung, erweitert wird.

39. Anordnung nach einem der Ansprüche 35 bis 38, bei der die Mündung des Einlasses mit einem zweiten Befestigungselement, wie z. B. einem Ring, einem Kragen oder einer Kappe, verschlossen wird, um **dadurch** eine weitere Bewegung des ersten Befestigungselementes einzuschränken.

40. Anordnung nach einem vorhergehenden Anspruch, bei welcher der Einlaß (153) eine Mündung (161) mit verringertem Durchmesser und eine Kammer (157) mit erweitertem Durchmesser aufweist und das Ende des zweiten Körpers (155) mit seinem einen anderen Außendurchmesser aufweisenden Abschnitt vollständig oder teilweise in der Kammer angeordnet ist, und daß das erste Befestigungselement (171) nach Einsetzen des Endes des zweiten Körpers in die Kammer (157) eingeführt wird, um **dadurch** in Eingriff mit dessen Abschnitt (163) mit anderem Außendurchmesser zu treten.

41. Anordnung nach einem vorhergehenden Anspruch, bei welcher der Einlaß (203) einen Mündungsabschnitt (211) umfaßt, der im wesentlichen den gleichen Durchmesser wie ein Kammerabschnitt (207) aufweist, der von diesem wegläuft.

42. Anordnung nach Anspruch 41, bei der das erste Befestigungselement (221) vor dem Einsetzen des Endes des zweiten Körpers in den Einlaß (203) auf das Ende des zweiten Körpers (205) in Eingriff mit dessen Abschnitt (213) mit anderem Außendurchmesser aufgesetzt wird.

43. Anordnung nach Anspruch 42, bei welcher der Außendurchmesser des ersten Befestigungselementes (221), wenn es auf diese Weise mit dem Ende des zweiten Körpers (205) in Eingriff steht, dergestalt ist, daß das Element eng an der Einlaßwand anliegt, wodurch das Befestigungselement um das Ende des zweiten Körpers herum fest gehaltert ist.

44. Anordnung nach Anspruch 43, bei der ein zweites Befestigungselement (231) eingesetzt wird, um die Mündung (211) des Einlasses (203) zu verschließen und somit das erste Befestigungselement (221) und den zweiten Körper (205) in ihrer Stellung im Einlaß zu halten.

45. Anordnung nach einem vorhergehenden Anspruch, bei welcher der erste Körper ein Adapter ist, dessen eines Ende mit dem Einlaß zur Aufnahme des Endes des zweiten Körpers und dessen anderes Ende mit einem Gewinde, vorzugsweise mit einem Außengewinde, zum Eingriff mit einem Gewindeabschnitt eines anderen Körpers versehen ist, oder auf andere Weise zum Eingriff mit dem Einlaß eines anderen Körpers ausgelegt ist.

## Revendications

1. Ensemble ayant un premier corps incluant un logement (151 ; 201 ; 251 ; 301) pour l'interconnexion avec un second corps (155 ; 205 ; 255 ; 305), le logement étant prévu avec une entrée (153 ; 203 ; 253 ; 303), pour recevoir l'extrémité du second corps et le second corps ayant une partie (163 ; 213 ; 263 ; 331), avec un diamètre externe différent du reste du second corps, et des moyens pour fixer ladite extrémité du second corps dans ladite entrée, lesdits moyens de fixation ayant au moins un premier élément de fixation pour engager le second corps sur différentes parties dudit diamètre externe pour ainsi fixer ladite extrémité du second corps dans ladite entrée, **caractérisé en ce que** le premier élément de fixation (171 ; 221 ; 271 ; 321) est sous la forme d'au moins deux parties séparées.

2. Ensemble selon la revendication 1, **caractérisé en ce que** ledit au moins un premier élément de fixation est déformable de manière telle que ledit premier élément de fixation se déforme durant l'insertion du second corps et se reforme au moins partiellement à une position dans laquelle ledit au moins un élément de fixation engage le second corps sur différentes parties du diamètre externe empêchant ainsi un mouvement relatif longitudinal entre ladite extrémité du second corps et ledit premier élément de fixation.

3. Ensemble selon la revendication 1 ou 2, **caractérisé en ce que** le premier élément de fixation est déformable de manière radiale.

4. Ensemble selon l'une des revendications précédentes, **caractérisé en ce que** ledit premier élément de fixation (171 ; 221 ; 271 ; 321) est sensiblement non déformable.

5. Ensemble selon l'une des revendications précédentes, **caractérisé en ce que** le premier élément de fixation (171 ; 221 ; 271 ; 321) est en deux ou trois parties.

6. Ensemble selon l'une des revendications précédentes, **caractérisé en ce que** le premier élément de fixation (171 ; 221 ; 271 ; 321) est disposé partiellement ou totalement dans l'entrée du logement (153 ; 203 ; 253 ; 303).

7. Ensemble selon la revendication 6, **caractérisé en ce que** le premier élément de fixation (321) est disposé dans l'entrée du logement avant l'insertion de l'extrémité du second corps (305).

8. Ensemble selon la revendication 6, **caractérisé en ce que** le premier élément de fixation (171 ; 221 ; 271) est inséré dans le logement après ou avec l'extrémité du second corps (155 ; 205 ; 255).

9. Ensemble selon l'une des revendications précédentes, **caractérisé en ce que** le premier élément de fixation est disposé partiellement ou totalement à l'extérieur de l'entrée du logement.

10. Ensemble selon l'une des revendications précédentes, **caractérisé en ce que** le moyen de fixation inclut un second élément de fixation (181 ; 231 ; 281 ; 283 ; 323) pour retenir le premier élément de fixation (171 ; 221 ; 271 ; 321) en engagement avec le second corps (155 ; 205 ; 255 ; 305) et facilitant ainsi le verrouillage de l'extrémité du second corps dans l'entrée (153 ; 203 ; 253 ; 303) du premier corps.

11. Ensemble selon la revendication 10, **caractérisé en ce que** le second élément de fixation (181 ; 231 ; 281 ; 323) comprend un anneau, un collier ou un chapeau.

12. Ensemble selon la revendication 11, **caractérisé en ce que** le second élément de fixation (181 ; 231 ; 281 ; 323) est déplaçable longitudinalement par rapport à l'extrémité du second corps afin d'être disposé où il est apte à maintenir le premier élément de fixation dans sa position d'engagement du second corps.

13. Ensemble selon l'une des revendications 10 à 12, **caractérisé en ce que** le second élément de fixation (181 ; 231 ; 323) est apte à être ajusté en place pour retenir le premier élément de fixation.

14. Ensemble selon l'une des revendications 10 à 13, **caractérisé en ce que** le second élément de fixation (181 ; 231 ; 323) est adapté pour être retenu de manière positive dans le premier corps dans une position pour maintenir le premier élément de fixation (171 ; 221 ; 321) dans sa position d'engagement du second corps.

15. Ensemble selon la revendication 14, **caractérisé en ce que** le second élément de fixation (181 ; 231 ; 323) est prévu avec au moins une languette, barbillon de rétention ou de même (234) pour retenir le second élément de fixation dans le premier corps.

16. Ensemble selon la revendication 14, **caractérisé en ce que** le second élément de fixation est prévu avec une vis filetée pour retenir le second élément de fixation dans le premier corps.

17. Ensemble selon la revendication 14, **caractérisé en ce qu'**un anneau élastique (283) peut être prévu derrière le second élément de fixation (281) pour le retenir en place.

18. Ensemble selon l'une des revendications précédentes, **caractérisé en ce que** le second élément de fixation (181 ; 281 ; 323) est disposé entre le premier élément de fixation (171 ; 271 ; 321) et le logement.

19. Ensemble selon l'une des revendications précédentes, **caractérisé en ce que** le premier élément de fixation est disposé entre le second élément de fixation et le logement.

20. Ensemble selon l'une des revendications précédentes, **caractérisé en ce que** le logement est disposé entre le premier élément de fixation et le second élément de fixation.

21. Ensemble selon l'une des revendications précédentes, **caractérisé en ce que** le second élément de fixation (181 ; 231 ; 281 ; 323) remplit l'espace dans l'entrée (153 ; 203 ; 253 ; 303) pour empêcher le mouvement du premier élément de fixation et du second corps, empêchant ainsi l'enlèvement du second corps (155 ; 205 ; 255 ; 305).

22. Ensemble selon l'une des revendications précédentes, **caractérisé en ce que** le premier élément de fixation et/ou second élément de fixation (231) comprend un matériau résilient.

23. Ensemble selon la revendication 22, **caractérisé en ce que** le matériau résilient est choisi dans le groupe comprenant le caoutchouc, l'élastomère, ou des substances plastiques.

24. Ensemble selon l'une des revendications 1 à 21, **caractérisé en ce que** le premier élément de fixation (171) et/ou second élément de fixation comprend un métal.

25. Ensemble selon l'une des revendications précédentes, **caractérisé en ce que** la partie (163 ; 213 ; 263 ; 331) du second corps avec un diamètre externe différent du reste du second corps s'étend de manière périphérique.

26. Ensemble selon l'une des revendications précédentes, **caractérisé en ce que** la partie (331) du second corps (305) avec un diamètre externe différent du second corps comprend une rainure.

27. Ensemble selon l'une des revendications précédentes, **caractérisé en ce que** la partie (163; 213; 263) du second corps (155 ; 205 ; 255) avec un diamètre externe différent du reste du second corps comprend une partie de diamètre externe élargi.

28. Ensemble selon la revendication 27, **caractérisé en ce que** la partie du diamètre externe élargi comprend une partie d'extrémité de diamètre élargi s'étendant longitudinalement vers l'extrémité ouverte du second corps.

29. Ensemble selon l'une des revendications précédentes, **caractérisé en ce que** l'ensemble inclut de plus des moyens d'étanchéité (167 ; 217 ; 267) pour fournir un joint entre le logement et le second corps.

30. Ensemble selon la revendication 29, **caractérisé en ce que** les moyens d'étanchéités (167 ; 217 ; 267) comprennent un anneau en forme de O.

31. Ensemble selon l'une des revendications précédentes, **caractérisé en ce que** le premier corps comprend une unité fonctionnelle.

32. Ensemble selon l'une des revendications précédentes, **caractérisé en ce que** le premier corps est un adaptateur ou connecteur qui connecte le second corps respectivement vers toujours un autre corps.

33. Ensemble selon l'une des revendications précédentes, **caractérisé en ce que** le second corps (155 ; 205 ; 255 ; 305) est creux ou solide.

34. Ensemble selon l'une des revendications précédentes, **caractérisé en ce que** le second corps (155) comprend un élément tubulaire, un tuyau, un conduit ou une canalisation.

35. Ensemble selon l'une des revendications précédentes, **caractérisé en ce que** l'entrée inclut une partie en bouche de diamètre réduit (161), et une chambre agrandie (157) s'étendant de celle-ci.

36. Ensemble selon la revendication 35, **caractérisé en ce que** la partie (163) de l'extrémité du second corps (155) ayant son diamètre externe différent de celui du reste du second corps repose totalement ou partiellement dans la chambre agrandie (157).

37. Ensemble selon la revendication 35 ou 36, **caractérisé en ce que** la chambre est de diamètre suffisamment grand pour recevoir un premier élément de fixation qui est tendu par ressort dans un état où il est de diamètre relativement étroit.

38. Ensemble selon la revendication 35 ou 36, **caractérisé en ce que** le premier élément de fixation est disposé au moins partiellement dans la chambre agrandie et **en ce qu'**il y a suffisamment d'espace, dans la chambre, pour l'élément de fixation devant être agrandi, préférentiellement radialement, du fait de l'introduction du second corps dans l'élément de fixation.

39. Ensemble selon l'une des revendications 35 à 38, **caractérisé en ce que** la bouche de l'entrée est fermée au moyen d'un second élément de fixation tel qu'un anneau, collier ou chapeau restreignant ainsi un mouvement ultérieur du premier élément de fixation.

40. Ensemble selon l'une des revendications précédentes, **caractérisé en ce que** l'entrée (153) inclut une bouche de diamètre réduit (161) et une chambre de diamètre agrandi (157), et l'extrémité du second corps (155) a sa partie de diamètre externe différente disposée totalement ou partiellement dans la chambre, et le premier élément de fixation (171) est manoeuvré dans la chambre (157) après insertion de l'extrémité du second corps, engageant ainsi la partie de diamètre externe différente (163) de celle-ci.

41. Ensemble selon l'une des revendications précédentes, **caractérisé en ce que** l'entrée (203) inclut une partie de bouche (211) sensiblement du même diamètre qu'une partie de chambre (207) s'étendant de celle-ci.

42. Ensemble selon la revendication 41, **caractérisé en ce que** le premier élément de fixation (221) est placé sur l'extrémité du second corps (205) en engagement avec la partie de diamètre externe différente (213) de celui-ci, avant l'insertion de l'extrémité du second corps dans l'entrée (203).

43. Ensemble selon la revendication 42, **caractérisé en ce que** le diamètre externe du premier élément de fixation (221) quand il est ainsi engagé sur l'extrémité du second corps (205) est tel que l'élément est en butée proche avec la paroi de l'entrée, conservant ainsi l'élément de fixation fermement en place autour de l'extrémité du second corps.

44. Ensemble selon la revendication 43, **caractérisé en ce qu'**un second élément de fixation (231) est employé pour fermer la bouche (211) de l'entrée (203) pour maintenir le premier élément de fixation (221) et le second corps (205) en place dans l'entrée.

45. Ensemble selon l'une des revendications précédentes, **caractérisé en ce que** le premier corps est un adaptateur ayant une extrémité prévue avec l'entrée pour recevoir l'extrémité du second corps et l'autre extrémité filetée, préférentiellement filetée de manière externe, pour l'engagement avec une partie filetée d'un autre corps, ou sinon est adapté pour l'engagement avec l'entrée d'un autre corps.
